# EUROPÄISCHE PATENTSCHRIFT

(11) **EP 4 115 585 B1**
(45) Veröffentlichungstag und Bekanntmachung des Hinweises auf die Patenterteilung: **04.09.2024**
(21) Anmeldenummer: 21725039.8
(22) Anmeldetag: 21.04.2021
(51) Int. Cl.: H04L 9/40, H04W 4/70

(54) **VORRICHTUNG UND VERFAHREN ZUM EINFÜGEN VON GERÄTEDATEN IN EIN VERTEILTES DATENBANKSYSTEM**
DEVICE AND METHOD FOR INSERTING DEVICE DATA INTO A DISTRIBUTED DATABASE SYSTEM
DISPOSITIF ET PROCÉDÉ DE SAISIE DES DONNÉES D'APPAREIL DANS UN SYSTÈME DE BANQUE DE DONNÉES DISTRIBUÉES

(30) Priorität: 24.04.2020 EP 20171352
(43) Veröffentlichungstag der Anmeldung: 11.01.2023
(73) Patentinhaber: Siemens Aktiengesellschaft, 80333 München (DE)
(72) Erfinder: AIGNER, Tobias, 81543 München (DE); SAUER, Markus, 81739 München (DE); SINGH, Saurabh Narayan, 81739 München (DE); ZUPAN, Nejc, 80337 München (DE)
(74) Vertreter: Siemens Patent Attorneys
(86) Internationale Anmeldenummer: PCT/EP2021/060417
(87) Internationale Veröffentlichungsnummer: WO 2021/214155

(56) Entgegenhaltungen:
- EP-A1- 3 595 267
- US-A1- 2019 013 948

## Beschreibung

Die Erfindung betrifft eine Vorrichtung und ein Verfahren zum Einfügen von Gerätedaten eines Geräts in ein verteiltes Datenbanksystem.

Zum relevanten Stand der Technik gehören z.B. die Patentdokumente US 2019/013948 A1 und EP 3 595 267 A1.

Geräte, wie zum Beispiel Feldgeräte oder Fertigungsgeräte, werden immer häufiger miteinander vernetzt, so dass sie Daten austauschen können bzw. auf ihre Daten zugegriffen werden kann. Dabei ist es wünschenswert, wenn die Gerätedaten in einer verteilten Datenbank, wie z.B. einer Blockkette (engl. Blockchain), zugänglich gemacht werden. Die Technologie von Blockketten (engl. Blockchains) bzw. "Distributed Ledgers" ist aktuell eine intensiv diskutierte Technologie, die insbesondere als verteiltes Datenbanksystem realisiert sein kann. Ein durch eine Blockchain geschützter Transaktionsdatensatz (oder kurz Transaktion) umfasst z. B. einen Programmcode/Programmbefehl, der auch als sogenannter "Smart Contract" bezeichnet werden kann.

Die Anbindung der Geräte an eine solche verteilte Datenbank ist allerdings in der Regel mit einem hohen Konfigurationsaufwand verbunden. Insbesondere im industriellen Umfeld kann aufgrund der hohen Anzahl an Geräten eine individuelle Konfiguration zur Anbindung an eine verteilte Datenbank sehr aufwändig sein. Zusätzlich stellt sich das Problem, dass oft der physische Zugriff auf diese Geräte aufgrund von Sicherheitsanforderungen nicht gegeben ist. Für eine Anbindung an eine verteilte Datenbank kann aber eine Modifikation der Hardware des Geräts notwendig sein, um beispielsweise von dem verteilten Datenbanksystem geforderte Rechenkapazitäten oder Sicherheitsfunktionen bereitzustellen.

Es ist daher die Aufgabe der Erfindung, eine aufwandsarme Möglichkeit zu schaffen, Gerätedaten in ein verteiltes Datenbanksystem einzufügen.

Die Aufgabe wird durch die in den unabhängigen Ansprüchen beschriebenen Maßnahmen gelöst. In den abhängigen Ansprüchen sind vorteilhafte Weiterbildungen der Erfindung dargestellt.

Gemäß einem ersten Aspekt betrifft die Erfindung eine Vorrichtung zum Einfügen von Gerätedaten eines Geräts in ein verteiltes Datenbanksystem, umfassend:
- eine erste Kommunikationsschnittstelle, die derart eingerichtet ist, eine Datenbankkonfigurationsinformation von dem verteilten Datenbanksystem zu empfangen,
- eine zweite Kommunikationsschnittstelle, die mit dem Gerät gekoppelt und derart eingerichtet ist, Gerätedaten von dem Gerät zu empfangen,
- ein Konfigurationsmodul, das derart eingerichtet ist,
   - mindestens einen Konfigurationsparameter aus einer Menge von auf dem Konfigurationsmodul gespeicherten Konfigurationsparametern für eine Konfiguration eines Datenbereitstellungsmodul der Vorrichtung zu selektieren,
   - den mindestens einen selektierten Konfigurationsparameter in Abhängigkeit der Datenbankkonfigurationsinformation zu prüfen und ein Prüfergebnis auszugeben,
   - und abhängig vom Prüfergebnis das Datenbereitstellungsmodul anhand des mindestens einen selektierten Konfigurationsparameters zu konfigurieren,
- ein Identifikationsmodul, das derart eingerichtet ist, eine Identifikationsinformation für die Vorrichtung bereitzustellen, wobei die Identifikationsinformation abhängig von mindestens einem Teil der Gerätedaten ist,
- ein Registrierungsmodul, das derart eingerichtet ist, die Vorrichtung abhängig von der Identifikationsinformation für das verteilte Datenbanksystem zu registrieren,
   und
- ein Datenbereitstellungmodul, das derart eingerichtet ist, abhängig vom Prüfergebnis die Gerätedaten mit Bezug auf die Identifikationsinformation in das verteilte Datenbanksystem einzufügen, wobei das Identifikationsmodul derart eingerichtet ist,
- die Identifikationsinformation an eine über das Netzwerk gekoppelte Identifikationsverwaltungseinheit zum Ausstellen eines Zertifikats in Abhängigkeit der Identifikationsinformation zu übermitteln und
- ein von der Identifikationsverwaltungseinheit ausgestelltes Zertifikat zum Registrieren der Vorrichtung für das verteilte Datenbanksystem zu empfangen, und wobei das Registrierungsmodul eingerichtet ist, die Vorrichtung anhand des Zertifikats zu registrieren.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt. Beispielsweise ist unter "rechnergestützt" auch "computerimplementiert" zu verstehen.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens oder der Module, oder anderer Aspekte und/oder Teilaspekte der Erfindung realisiert.

Unter einem "Modul" kann im Zusammenhang mit der Erfindung beispielsweise ein Prozessor und/oder eine Speichereinheit zum Speichern von Programmcode verstanden werden. Beispielsweise ist der Prozessor speziell dazu eingerichtet, den Programmcode derart auszuführen, damit der Prozessor Funktionen ausführt, um das erfindungsgemäße Verfahren oder einen Schritt des erfindungsgemäßen Verfahrens zu implementieren oder realisieren. Die jeweiligen Module können beispielsweise auch als separate bzw. eigenständige Module ausgebildet sein. Hierzu können die entsprechenden Module beispielsweise weitere Elemente umfassen. Diese Elemente sind beispielsweise eine oder mehrere Schnittstellen (z. B. Datenbankschnittstellen, Kommunikationsschnittstellen - z. B. Netzwerkschnittstelle, WLAN-Schnittstelle) und/oder eine Evaluierungseinheit (z. B. ein Prozessor) und/oder eine Speichereinheit. Mittels der Schnittstellen können beispielsweise Daten ausgetauscht (z. B. empfangen, übermittelt, gesendet oder bereitgestellt werden). Mittels der Evaluierungseinheit können Daten beispielsweise rechnergestützt und/oder automatisiert verglichen, überprüft, verarbeitet, zugeordnet oder berechnet werden. Mittels der Speichereinheit können Daten beispielsweise rechnergestützt und/oder automatisiert gespeichert, abgerufen oder bereitgestellt werden.

Unter "bereitstellen", insbesondere in Bezug auf Daten und/oder Informationen, kann im Zusammenhang mit der Erfindung beispielsweise ein rechnergestütztes Bereitstellen verstanden werden. Das Bereitstellen erfolgt beispielsweise über eine Schnittstelle (z. B. eine Datenbankschnittstelle, eine Netzwerkschnittstelle, eine Schnittstelle zu einer Speichereinheit). Über diese Schnittstelle können beispielsweise beim Bereitstellen entsprechende Daten und/oder Informationen übermittelt und/oder gesendet und/oder abgerufen und/oder empfangen werden. Unter "bereitstellen" kann im Zusammenhang mit der Erfindung beispielsweise auch ein Laden oder ein Speichern, beispielsweise einer Transaktion mit entsprechenden Daten verstanden werden. Unter "Bereitstellen" kann beispielsweise auch ein Übertragen (oder ein Senden oder ein Übermitteln) von entsprechenden Daten von einem Knoten zu einem anderen Knoten der Blockkette oder des verteilten Datenbanksystems (bzw. deren Infrastruktur) verstanden werden.

Unter einer "Prüfsumme", beispielsweise eine Datenblockprüfsumme, eine Datenprüfsumme, eine Knotenprüfsumme, eine Transaktionsprüfsumme, eine Verkettungsprüfsumme oder dergleichen, kann im Zusammenhang mit der Erfindung beispielsweise eine kryptographische Prüfsumme oder kryptographischer Hash bzw. Hashwert verstanden werden, die insbesondere mittels einer kryptographischen Hashfunktion über einen Datensatz und/oder Daten und/oder eine oder mehrere der Transaktionen und/oder einem Teilbereich eines Datenblocks (z. B. der Block-Header eines Blocks einer Blockkette oder Datenblock-Header eines Datenblocks des verteilten Datenbanksystems oder nur einem Teil der Transaktionen eines Datenblocks) gebildet oder berechnet werden. Bei einer Prüfsumme kann es sich insbesondere um eine Prüfsumme/n oder Hashwert/e eines Hash-Baumes (z. B. Merkle Baum, Patricia-Baum) handeln. Weiterhin kann darunter insbesondere auch eine digitale Signatur oder ein kryptographischer Nachrichtenauthentisierungscode verstanden werden. Mittels der Prüfsummen kann beispielsweise auf unterschiedlichen Ebenen des Datenbanksystems ein kryptographischer Schutz/Manipulationsschutz für die Transaktionen und die darin gespeicherten Daten(sätze) realisiert werden. Ist beispielsweise eine hohe Sicherheit gefordert, werden beispielsweise die Prüfsummen auf Transaktionsebene erzeugt und überprüft.

Unter einer "Datenblockprüfsumme" kann im Zusammenhang mit der Erfindung eine Prüfsumme verstanden werden, die beispielsweise über einen Teil oder alle Transaktionen eines Datenblocks berechnet wird. Ein Knoten kann dann beispielsweise die Integrität/Authentizität des entsprechenden Teils eines Datenblocks mittels der Datenblockprüfsumme prüfen/feststellen. Zusätzlich oder alternativ kann die Datenblockprüfsumme insbesondere auch über Transaktionen eines vorhergehenden Datenblocks/Vorgänger-Datenblocks des Datenblocks gebildet worden sein. Die Datenblockprüfsumme kann dabei insbesondere auch mittels eines Hash-Baumes, beispielsweise einem Merkle Baum oder einem Patricia-Baum, realisiert werden, wobei die Datenblockprüfsumme insbesondere die Wurzel-Prüfsumme des Merkle-Baumes bzw. eines Patricia-Baumes bzw. eines binären Hashbaumes ist. Insbesondere werden Transaktionen mittels weiterer Prüfsummen aus dem Merkle-Baum bzw. Patricia-Baum abgesichert (z. B. unter Verwendung der Transaktionsprüfsummen), wobei insbesondere die weiteren Prüfsummen Blätter im Merkle-Baum bzw. Patricia-Baum sind. Die Datenblockprüfsumme kann damit beispielsweise die Transaktionen absichern, indem die Wurzel-Prüfsumme aus den weiteren Prüfsummen gebildet wird. Die Datenblockprüfsumme kann insbesondere für Transaktionen eines bestimmten Datenblocks der Datenblöcke berechnet werden. Insbesondere kann eine solche Datenblockprüfsumme in einen nachfolgenden Datenblock des bestimmten Datenblocks eingehen, um diesen nachfolgenden Datenblock beispielsweise mit seinen vorhergehenden Datenblöcken zu verketten und insbesondere damit eine Integrität des verteilten Datenbanksystems prüfbar zu machen. Hierdurch kann die Datenblockprüfsumme beispielsweise die Funktion der Verkettungsprüfsumme übernehmen oder in die Verkettungsprüfsumme eingehen. Der Header eines Datenblocks (z. B. eines neuen Datenblocks oder des Datenblocks, für den die Datenblockprüfsumme gebildet wurde) kann beispielsweise die Datenblockprüfsumme umfassen.

Unter "Transaktionsprüfsumme" kann im Zusammenhang mit der Erfindung eine Prüfsumme verstanden werden, die insbesondere über eine Transaktion eines Datenblocks gebildet wird. Zusätzlich kann beispielsweise eine Berechnung einer Datenblockprüfsumme für einen entsprechenden Datenblock beschleunigt werden, da hierfür beispielsweise bereits berechnete Transaktionsprüfsummen gleich als Blätter z. B. eines Merkle-Baumes verwendet werden können.

Unter einer "Verkettungsprüfsumme" kann im Zusammenhang mit der Erfindung eine Prüfsumme verstanden werden, die insbesondere einen jeweiligen Datenblock des verteilten Datenbanksystems den vorhergehenden Datenblock des verteilten Datenbanksystems angibt bzw. referenziert. Hierfür wird insbesondere für den entsprechenden vorhergehenden Datenblock eine entsprechende Verkettungsprüfsumme gebildet. Als Verkettungsprüfsumme kann beispielsweise eine Trans-aktionsprüfsumme oder die Datenblockprüfsumme eines Datenblocks (also ein vorhandener Datenblock des verteilten Datenbanksystems) verwendet werden, um einen neuen Datenblock mit einem (vorhandenen) Datenblock des verteilten Datenbanksystems zu verketten. Es ist beispielsweise aber auch möglich, dass eine Prüfsumme über einen Header des vorhergehenden Datenblocks oder über den gesamten vorhergehenden Datenblock gebildet wird und als Verkettungsprüfsumme verwendet wird. Dies kann beispielsweise auch für mehrere oder alle vorhergehenden Datenblöcke berechnet werden. Es ist beispielsweise auch realisierbar, dass über den Header eines Datenblocks und der Datenblockprüfsumme die Verkettungsprüfsumme gebildet wird. Ein jeweiliger Datenblock des verteilten Datenbanksystems umfasst jedoch vorzugsweise jeweils eine Verkettungsprüfsumme, die für einen vorhergehenden Datenblock, insbesondere noch bevorzugter den direkt vorhergehenden Datenblock, des jeweiligen Datenblockes berechnet wurde bzw. sich auf diesen bezieht. Es ist beispielsweise auch möglich, dass eine entsprechende Verkettungsprüfsumme auch nur über einen Teil des entsprechenden Datenblocks (z. B. vorhergehenden Daten-block) gebildet wird. Hierdurch kann beispielsweise ein Datenblock realisiert werden, der einen integritätsgeschützten Teil und einen ungeschützten Teil umfasst. Damit ließe sich beispielsweise ein Datenblock realisieren, dessen integritätsgeschützter Teil unveränderlich ist und dessen ungeschützter Teil auch noch später verändert werden kann. Unter integritätsgeschützt ist dabei insbesondere zu verstehen, dass eine Veränderung von integritätsgeschützten Daten mittels einer Prüfsumme feststellbar ist.

Unter "Verketten der/von Datenblöcken eines verteilten Datenbanksystems" kann im Zusammenhang mit der Erfindung beispielsweise verstanden werden, dass Datenblöcke jeweils eine Information, z. B. eine Verkettungsprüfsumme, umfassen, die auf einen anderen Datenblock oder mehrere andere Datenblöcke des verteilten Datenbanksystems verweisen bzw. diese referenzieren.

Unter "Einfügen in das verteilte Datenbanksystem" und dergleichen kann im Zusammenhang mit der Erfindung beispielsweise verstanden werden, dass insbesondere eine Transaktion bzw. die Transaktionen oder ein Datenblock mit seinen Transaktionen an einen oder mehrere Knoten eines verteilten Datenbanksystems übermittelt wird. Werden diese Transaktionen beispielsweise erfolgreich validiert (z. B. durch den/die Knoten), werden diese Transaktionen insbesondere als neuer Datenblock mit mindestens einem vorhandenen Datenblock des verteilten Datenbanksystems verkettet. Hierzu werden die entsprechenden Transaktionen beispielsweise in einem neuen Datenblock gespeichert. Insbesondere kann dieses Validieren und/oder Verketten durch einen vertrauenswürdigen Knoten erfolgen.

Unter "Transaktion" bzw. "Transaktionen" können im Zusammenhang mit der Erfindung beispielsweise ein Smart-Contract, eine Datenstruktur oder ein Transaktionsdatensatz verstanden werden, der insbesondere jeweils eine der Transaktionen oder mehrere Transaktionen umfasst. Unter "Transaktion" bzw. "Transaktionen" können im Zusammenhang mit der Erfindung beispielsweise auch die Daten einer Transaktion eines Datenblocks einer Bockkette (engl. Blockchain) verstanden werden.

Eine Transaktion kann insbesondere einen Programmbefehl umfassen, der beispielsweise einen Smart Contract realisiert. Alternativ kann eine Transaktion beispielsweise eine Datenstruktur sein, die Daten speichert (z. B. die Steuerbefehle und/oder Vertragsdaten und/oder andere Daten wie Videodaten, Nutzerdaten, Messdaten etc.). Eine "Transaktion" kann im Zusammenhang mit der Erfindung beispielsweise auch eine Nachricht oder eine Kommunikationsnachricht sein bzw. als ein solche bezeichnet werden, wobei die Nachricht beispielsweise Steuerbefehle zum Ansteuern der Geräte umfasst und/oder auch Voraussetzungen (z. B. vorgegebene Anforderungen) für das Ausführen der Steuerbefehle umfasst.

Insbesondere ist unter "Speichern von Transaktionen in Datenblöcken", "Speichern von Transaktionen" und dergleichen ein direktes Speichern oder indirektes Speichern zu verstehen. Unter einem direkten Speichern kann dabei beispielsweise verstanden werden, dass der entsprechende Datenblock des verteilten Datenbanksystems oder die entsprechende Transaktion des verteilten Datenbanksystems die jeweiligen Daten umfasst. Unter einem indirekten Speichern kann dabei beispielsweise verstanden werden, dass der entsprechende Datenblock oder die entsprechende Transaktion eine Prüfsumme und optional einen Zusatzdatensatz (z. B. einen Verweis oder eine Angabe zu einem Speicherort) für entsprechende Daten umfasst und die entsprechenden Daten somit nicht direkt in dem Datenblock (oder der Transaktion) gespeichert sind (also stattdessen nur eine Prüfsumme für diese Daten). Insbesondere können beim Speichern von Transaktionen in Datenblöcken diese Prüfsummen beispielsweise validiert werden, so wie dies beispielsweise unter "Einfügen in das verteilte Datenbanksystem" erläutert ist.

Unter einem "Programmcode" (z. B. ein Smart-Contract) kann im Zusammenhang mit der Erfindung beispielsweise ein Programmbefehl oder mehrere Programmbefehle verstanden werden, die insbesondere in einer oder mehreren Transaktionen gespeichert sind. Der Programmcode ist insbesondere ausführbar und wird beispielsweise durch das verteilte Datenbanksystem ausgeführt. Der Programmcode wird vorzugsweise durch die Infrastruktur des verteilten Datenbanksystems ausgeführt. Unter einem "Smart Contract" kann im Zusammenhang mit der Erfindung beispielsweise ein ausführbarer Programmcode/Programmbefehl verstanden werden. Der Smart Contract ist vorzugsweise in einer Transaktion eines verteilten Datenbanksystems (z. B. eine Blockkette) gespeichert, beispielsweise in einem Datenblock des verteilten Datenbanksystems.

Unter einem "verteilten Datenbanksystem", das beispielsweise auch als verteilte Datenbank bezeichnet werden kann, kann im Zusammenhang mit der Erfindung beispielsweise eine dezentral verteilte Datenbank, eine Blockkette (engl. Blockchain), ein distributed Ledger, ein verteiltes Speichersystem, ein distributed ledger technology (DLT) based system (DLTS), ein revisionssicheres Datenbanksystem, eine Cloud, ein Cloud-Service, eine Blockkette in einer Cloud oder eine Peer-to-Peer Datenbank verstanden werden. Auch können beispielsweise unterschiedliche Implementierungen einer Blockkette oder eines DLTS verwendet werden, wie z. B. eine Blockkette oder ein DLTS, die mittels eines Directed Acylic Graph (DAG), eines kryptographischen Puzzles, einem Hashgraph oder eine Kombination aus den genannten Implementierungsvarianten. Auch können beispielsweise unterschiedliche Konsensusverfahren (engl. consensus algorithms) implementiert werden. Dies kann beispielsweise ein Konsensusverfahren mittels eines kryptographischen Puzzles, Gossip about Gossip, Virtual Voting oder eine Kombination der genannten Verfahren sein (z. B. Gossip about Gossip kombiniert mit Virtual Voting). Wird beispielsweise eine Blockkette verwendet, so kann diese insbesondere mittels einer Bitcoin-basierten Realisierung oder einer Ethereum-basierten Realisierung umgesetzt werden. Unter einem "verteilten Datenbanksystem" kann beispielsweise auch ein verteiltes Datenbanksystem verstanden werden, von dem zumindest ein Teil seiner Knoten und/oder Geräte und/oder Infrastruktur durch eine Cloud realisiert sind. Beispielsweise sind die entsprechenden Komponenten als Knoten in der Cloud (z. B. als virtueller Knoten in einer virtuellen Maschine) realisiert.

Bei einem verteilten Datenbanksystem kann es sich beispielsweise auch um ein verteiltes Kommunikationssystem zum Datenaustausch handeln. Dies kann beispielsweise ein Netzwerk oder ein Peer-2-Peer Netzwerk sein.

Unter "Datenblock", der insbesondere je nach Kontext und Realisierung auch als 'Glied" oder "Block" bezeichnet sein kann, kann im Zusammenhang mit der Erfindung beispielsweise ein Datenblock eines verteilten Datenbanksystems (z. B. eine Blocckette oder eine Peer to Peer Datenbank) verstanden werden, die insbesondere als Datenstruktur realisiert ist und vorzugsweise jeweils eine der Transaktionen oder mehrere der Transaktionen umfasst. Bei einer Implementierung kann beispielsweise die Datenbank (oder das Datenbanksystem) ein DLT basiertes System (DLTS) oder eine Blockkette sein und ein Datenblock ein Block der Blockkette oder des DLTS. Ein Datenblock kann beispielsweise Angaben zur Größe (Datengröße in Byte) des Datenblocks, einen Datenblock-Header (engl. Block-header), einen Transaktionszähler und eine oder mehrere Transaktionen umfassen. Der Datenblock-Header kann beispielsweise eine Version, eine Verkettungsprüfsumme, eine Datenblockprüfsumme, einen Zeitstempel, einen Proof-of-Work Nachweis und eine Nonce (Einmalwert, Zufallswert oder Zähler, der für den Proof-of-Work Nachweis verwendet wird) umfassen.

Unter einem "Blockketten-Knoten", "Knoten", "Knoten eines verteilten Datenbanksystems" und dergleichen, kann im Zusammenhang mit der Erfindung insbesondere eine Vorrichtung verstanden werden, die mit beispielsweise Geräten (z. B. Feldgeräte, Mobiltelefone), Rechner, Smart-Phones, Clients oder Teilnehmer gekoppelt ist, wobei die Vorrichtung die Operationen (mit) dem verteilten Datenbanksystem (z. B. eine Blocckette) durchführen. Außerdem können weitere Knoten des verteilten Datenbanksystems selbst Geräte, Rechner o.ä. sein.

Solche Knoten können beispielsweise Transaktionen eines verteilten Datenbanksystems bzw. deren Datenblöcke ausführen oder neue Datenblöcke mit neuen Transaktionen in das verteilte Datenbanksystem mittels neuer Datenblöcke einfügen bzw. verketten.

Durch die Identifikationsinformation kann insbesondere ein Nachweis bereitgestellt werden, der angibt, dass der entsprechende Datenblock von einem bestimmten Knoten eingefügt wurde bzw. seine Herkunft angibt. Bei den Geräten handelt es sich beispielsweise um Geräte eines technischen Systems und/oder einer industriellen Anlage und/oder eines Automatisierungsnetzes und/oder einer Fertigungsanlage. Dabei können die Geräte beispielsweise Feldgeräte sein oder Geräte im Internet der Dinge sein.

Ein solches Gerät soll beispielsweise auf die Daten des verteilten Datenbanksystems zugreifen bzw. Daten einfügen können, wobei aber das Gerät beispielsweise zu alt sein kann und weder über die notwendigen kryptographischen und/oder IT-Security-Fähigkeiten und/oder Rechenkapazitäten verfügt noch mit dem Datenformat des verteilten Datenbanksystems kompatibel ist.

Somit ist ein Vorteil der Erfindung, dass die vorgeschlagene Vorrichtung eine Anbindung eines Geräts an ein verteiltes Datenbanksystem ermöglicht, so dass beispielsweise Gerätedaten oder entsprechende integritätssichernde Datenreferenzen (z.B. ein Hash) des Geräts in das verteilte Datenbanksystem eingefügt werden können. Im vorteilhaften Fall erfolgt die Anbindung insbesondere mit reduziertem Konfigurationsaufwand und/oder reduziertem Administrationsaufwand und/oder verbesserten Sicherheitsbedingungen. Die Vorrichtung kann insbesondere an mehr als ein verteiltes Datenbanksystem angebunden werden, so dass das die Gerätedaten insbesondere in mehr als ein verteiltes Datenbanksystem eingefügt werden können. Es ist auch denkbar, dass verschiedene Teile der Gerätedaten in unterschiedliche verteilte Datenbanksysteme eingefügt werden.

Die Vorrichtung und/oder deren Module können in Hardware und/oder Software realisiert sein. Die Vorrichtung wird mit dem Gerät gekoppelt, so dass das Gerät mit einer Funktionalität ergänzt wird, die einen Datenaustausch mit dem verteilten Datenbanksystem ermöglicht. Die Kopplung zwischen Gerät und Vorrichtung erfolgt über die zweite Kommunikationsschnittstelle der Vorrichtung. Vorzugsweise umfasst das Gerät eine entsprechende Schnittstelle, um Gerätedaten dieser zweiten Kommunikationsschnittstelle der Vorrichtung bereitzustellen bzw. an diese zu senden. Somit kann durch die Vorrichtung das Gerät als ein Knoten des verteilten Datenbanksystems konfiguriert werden. In anderen Worten, die Vorrichtung und das anzubindende Gerät sind vorzugsweise eng über Software- und/oder Hardwarekomponenten gekoppelt, so dass die Vorrichtung das Gerät in der verteilten Datenbank repräsentiert.

Beispielsweise kann ein Gerät mittels der Vorrichtung Blockchain-fähig gestaltet werden. Da die Vorrichtung an das Gerät gekoppelt wird, ist insbesondere kein weiterer Installation- und/oder Konfigurationsprozess am Gerät selbst notwendig, um ein Gerät an eine vorkonfigurierte verteilte Datenbank anzubinden. Außerdem ist die Vorrichtung insbesondere flexibel und kann an verschiedene Geräte gekoppelt werden. Es ist außerdem keine weitere Schnittstelle für das Gerät notwendig, so dass beispielsweise das Risiko für Angriffe auf das Gerät minimiert werden können. Die Vorrichtung wird gemäß der Datenbankkonfigurationsinformation, wie z.B. Netzwerkidentität, konfiguriert, um eine Anbindung des Geräts an die verteilte Datenbank zu ermöglichen. Vorzugsweise werden die Gerätedaten von dem Datenbereitstellungsmodul über die erste Kommunikationsschnittstelle in das verteilte Datenbanksystem eingefügt. Alternativ kann die Vorrichtung eine weitere Kommunikationsschnittstelle umfassen, die mit dem Datenbereitstellungsmodul gekoppelt ist, so dass die Gerätedaten über diese weitere Kommunikationsschnittstelle in das verteilte Datenbanksystem eingefügt werden können. So ist die Vorrichtung insbesondere unabhängig von verschiedenen Blockchain-Technologien.

In einer Ausführungsform der Vorrichtung kann die zweite Kommunikationsschnittstelle eingerichtet sein, die Gerätedaten dem Datenbereitstellungsmodul für das Einfügen in das verteilte Datenbanksystem bereitzustellen.

Dies hat insbesondere den Vorteil, dass Gerätedaten, die in das verteilte Datenbanksystem eingefügt werden sollen, vom Gerät lediglich bereitgestellt werden. Die weitere Prozessierung zum Einfügen der Gerätedaten in die verteilte Datenbank erfolgt durch die Vorrichtung.

In einer weiteren Ausführungsform der Vorrichtung kann das Konfigurationsmodul derart eingerichtet sein, das Datenbereitstellungsmodul anhand des mindestens einen selektierten Konfigurationsparameters zu konfigurieren, so dass das Datenbereitstellungsmodul eine für das verteilte Datenbanksystem geeignete Konfiguration aufweist.

Vorzugsweise kann die Vorrichtung an verschiedene Typen von verteilten Datenbanksystemen, wie z.B. verschiedene Blockchain-Technologien, gekoppelt werden. Dazu sind vorzugsweise geeignete Konfigurationsparameter auf dem Konfigurationsmodul gespeichert, um das Datenbereitstellungsmodul derart einzustellen, dass dieses einen Datenaustausch mit dem verteilten Datenbanksystem durchführen kann.

Konfigurationsparameter können beispielsweise folgende Parameter bzw. Informationen sein: Zugriffsrollen, Verbindungsprofile, und/oder erlaubte kryptographische Verfahren. Insbesondere können Konfigurationsparameter mindestens eine Regel umfassen, die beschreibt, in welchem Format Gerätedaten bereitgestellt werden müssen, um sie in das verteilte Datenbanksystem einzufügen.

In einer weiteren Ausführungsform der Vorrichtung kann das Datenbereitstellungsmodul derart eingerichtet sein, die Gerätedaten in ein datenbankspezifisches Format gemäß der Datenbankkonfigurationsinformation zu konvertieren und derart in das verteilte Datenbanksystem einzufügen.

Somit werden die Gerätedaten durch die Vorrichtung in ein Format gebracht, dass mit dem verteilten Datenbanksystem kompatibel ist. Somit muss eine Gerätekonfiguration des Geräts selbst nicht verändert werden. Beispielsweise können die Daten derart bereitgestellt werden, dass sie als Teil einer Blockkette eingefügt werden können. Beispielsweise können die Gerätedaten an eine Transaktion gekoppelt und so in das verteilte Datenbanksystem eingefügt werden.

In einer weiteren Ausführungsform der Vorrichtung kann das Identifikationsmodul derart eingerichtet sein, die Identifikationsinformation abhängig von der Datenbankkonfigurationsinformation bereitzustellen.

Somit kann die Identität des Geräts und somit der damit gekoppelten Vorrichtung für ein verteiltes Datenbanksystem abhängig von dessen Konfiguration bestimmt sein. Die Identität ist insbesondere an Zugriffsrechte der Vorrichtung bzw. des Geräts gekoppelt.

In einer weiteren Ausführungsform der Vorrichtung kann die erste Kommunikationsschnittstelle derart eingerichtet sein, Daten über ein mit der Vorrichtung verbundenes Netzwerk, über welches das verteilte Datenbanksystem realisiert ist, zu empfangen und anhand der empfangenen Daten eine Verfügbarkeit des verteilten Datenbanksystems zu detektieren.

So kann anhand von Daten des verbundenen Netzwerks ermittelt werden, ob ein verteiltes Datenbanksystem verfügbar ist, in welches das Gerät Gerätedaten einfügen kann.

In einer weiteren Ausführungsform der Vorrichtung kann das Identifikationsmodul derart eingerichtet sein,
- die Identifikationsinformation an eine über das Netzwerk gekoppelte Identifikationsverwaltungseinheit zum Ausstellen eines Zertifikats in Abhängigkeit der Identifikationsinformation zu übermitteln und
- ein von der Identifikationsverwaltungseinheit ausgestelltes Zertifikat zum Registrieren der Vorrichtung für das verteilte Datenbanksystem zu empfangen.

In einer weiteren Ausführungsform der Vorrichtung kann das Registrierungsmodul eingerichtet sein, die Vorrichtung anhand des Zertifikats zu registrieren.

Vorzugsweise wird abhängig von der Identifikationsinformation eine Anfrage auf eine Zertifikatsausstellung an die Identifikationsverwaltungseinheit, wie z.B. eine Zertifizierungsstelle, gesendet, wobei die Identifikationsverwaltungseinheit vorzugsweise dem verteilten Datenbanksystem zugeordnet ist. Die Identifikationsverwaltungseinheit kann insbesondere Zertifikate ausstellen und/oder widerrufen und/oder Identitätsinformationen ausstellen, widerrufen und/oder verifizieren. Sobald die Identifikationsverwaltungseinheit ein gültiges Zertifikat für die Vorrichtung auf Basis der Identifikationsinformation ausgestellt, signiert und zurückübermittelt hat, kann das Registrierungsmodul das Gerät für die verteilte Datenbank registrieren. Folglich hat das Gerät über die Vorrichtung Zugriff auf die verteilte Datenbank.

In einer weiteren Ausführungsform kann die Vorrichtung ein Verwaltungsmodul umfassen, das derart eingerichtet ist, in Abhängigkeit der Identifikationsinformation mindestens einen Programmbefehl von dem verteilten Datenbanksystem zu empfangen, wobei der Programmbefehl mindestens eine Regel für das Einfügen von Gerätedaten in das verteilte Datenbanksystem umfasst, und den Programmbefehl dem Datenbereitstellungsmodul bereitzustellen.

In einer weiteren Ausführungsform der Vorrichtung kann das Datenbereitstellungsmodul derart eingerichtet sein, die Gerätedaten gemäß der Regel des Programmbefehls in das verteilte Datenbanksystem einzufügen.

Ein Programmbefehl kann insbesondere ein Smart Contract sein. Das Verwaltungsmodul ist vorzugsweise derart eingerichtet, Smart Contracts und entsprechende Regelwerke für die Vorrichtung bzw. das Gerät zu empfangen. Insbesondere kann der Programmbefehl abhängig von einer Identifikationsinformation des Geräts sein. Damit wird gewährleistet, dass lediglich Daten mit dem verteilten Datenbanksystem ausgetauscht werden, für die das mit der Vorrichtung verbundene Gerät eine Berechtigung hat. Außerdem wird damit gewährleistet, dass lediglich die Smart-Contracts empfangen werden, die für das mit der Vorrichtung verbundene Gerät relevant sind.

In einer weiteren Ausführungsform der Vorrichtung kann das Datenbereitstellungsmodul derart eingerichtet sein, abhängig von der Registrierung der Vorrichtung das verteilte Datenbanksystem anzusteuern.

Somit kann die Vorrichtung, sobald diese in Abhängigkeit von Gerätedaten für das verteilte Datenbanksystem registriert ist, Daten für das Gerät mit dem verteilten Datenbanksystem austauschen bzw. Daten einfügen. In anderen Worten, durch die Registrierung wird die Vorrichtung bzw. das Gerät als ein Knoten der verteilten Datenbank eingerichtet.

In einer weiteren Ausführungsform der Vorrichtung kann das verteilte Datenbanksystem als eine Blockkette (engl. Blockchain) realisiert sein.

Gemäß einem weiteren Aspekt betrifft die Erfindung ein computerimplementiertes Verfahren zum Einfügen von Gerätedaten eines Geräts in ein verteiltes Datenbanksystem, umfassend die Schritte:
- Empfangen einer Datenbankkonfigurationsinformation eines verteilten Datenbanksystems,
- Empfangen von Gerätedaten von dem Gerät,
- Selektieren mindestens eines Konfigurationsparameters aus einer Menge von gespeicherten Konfigurationsparametern für eine Konfiguration eines Datenbereitstellungsmoduls einer Vorrichtung,

- Prüfen des mindestens einen selektierten Konfigurationsparameters in Abhängigkeit der Datenbankkonfigurationsinformation und Ausgeben eines Prüfergebnisses,
- Konfigurieren des Datenbereitstellungsmoduls abhängig vom Prüfergebnis anhand des mindestens einen selektierten Konfigurationsparameters,
- Bereitstellen einer Identifikationsinformation für die Vorrichtung,
- Registrieren der Vorrichtung für das verteilte Datenbanksystem abhängig von der Identifikationsinformation, wobei die Identifikationsinformation abhängig von mindestens einem Teil der Gerätedaten ist,
   und
- Einfügen der Gerätedaten mit Bezug auf die Identifikationsinformation in das verteilte Datenbanksystem abhängig vom Prüfergebnis.

Des Weiteren betrifft die Erfindung ein Computerprogrammprodukt, das direkt in einen programmierbaren Computer ladbar ist, umfassend Programmcodeteile, die bei der Ausführung des Programms durch einen Computer diesen veranlassen, die Schritte eines erfindungsgemäßen Verfahrens auszuführen.

Ein Computerprogrammprodukt kann beispielsweise auf einem Speichermedium, wie z.B. Speicherkarte, USB-Stick, CD-ROM, DVD, ein nichtflüchtiger/dauerhaftes Speichermedium (engl. Non-transitory storage Medium) oder auch in Form einer herunterladbaren Datei von einem Server in einem Netzwerk bereitgestellt oder geliefert werden.

Ausführungsbeispiele der erfindungsgemäßen Vorrichtung und des erfindungsgemäßen Verfahrens sind in den Zeichnungen beispielhaft dargestellt und werden anhand der nachfolgenden Beschreibung näher erläutert. Es zeigen:
- Fig. 1:: ein Ausführungsbeispiel einer erfindungsgemäßen Vorrichtung zum Einfügen von Gerätedaten eines Geräts in ein verteiltes Datenbanksystem; und
- Fig. 2:: ein Ausführungsbeispiel eines erfindungsgemäßen Verfahrens zum Einfügen von Gerätedaten eines Geräts in ein verteiltes Datenbanksystem.

Einander entsprechende Teile sind in allen Figuren mit den gleichen Bezugszeichen versehen.

Insbesondere zeigen die nachfolgenden Ausführungsbeispiele lediglich beispielhafte Realisierungsmöglichkeiten, wie insbesondere solche Realisierungen der erfindungsgemäßen Lehre aussehen könnten, da es unmöglich und auch für das Verständnis der Erfindung nicht zielführend oder notwendig ist, all diese Realisierungsmöglichkeiten zu benennen.

Auch sind insbesondere einem (einschlägigen) Fachmann in Kenntnis des/der Verfahrensanspruchs/Verfahrensansprüche alle im Stand der Technik üblichen Möglichkeiten zur Realisierung der Erfindung selbstverständlich bekannt, sodass es insbesondere einer eigenständigen Offenbarung in der Beschreibung nicht bedarf.

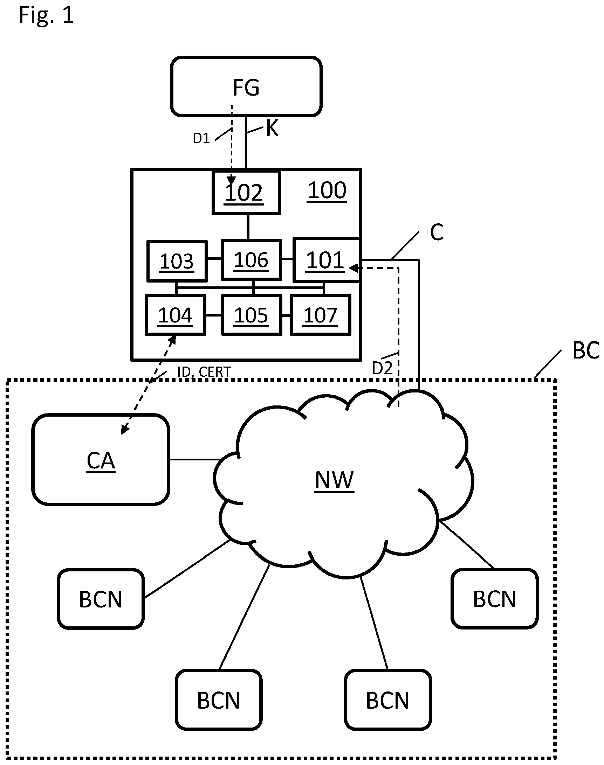

Figur 1 zeigt ein erstes Ausführungsbeispiel der Erfindung. Es ist eine Vorrichtung 100 gemäß der Erfindung gezeigt, die mit einem Gerät FG über eine Verbindung K gekoppelt ist. Die Vorrichtung 100 ist derart eingerichtet, Gerätedaten D1 des Geräts FG in ein verteiltes Datenbanksystem einzufügen. Das verteilte Datenbanksystem kann beispielsweise eine Blockkette BC (engl. Blockchain) sein. Die Vorrichtung 100 kann das Gerät FG insbesondere an mehr als ein verteiltes Datenbanksystem koppeln. Außerdem ist es denkbar, dass Gerätedaten oder Teile der Gerätedaten mittels der Vorrichtung in mehr als ein gekoppeltes verteiltes Datenbanksystem eingefügt werden.

Die Vorrichtung 100 kann alternativ auch als Teil des Geräts FG realisiert sein. So kann die Vorrichtung 100 beispielsweise innerhalb einer geschützten Umgebung des Geräts, wie z.B. im Secure Element eines Prozessors des Geräts oder als separater Chip oder als separate Software-Komponente des Geräts realisiert sein.

Das Gerät FG kann beispielsweise ein Feldgerät, ein Fertigungsgerät, ein Sensor, eine programmierbare Steuerung (engl. Programmable logic controller, PLC), eine programmierbare Automatisierungssteuerung (engl. Programmable automation controller, PAC) oder ein medizinisches Gerät sein. Insbesondere kann das Gerät FG keine Funktionalität zum Einfügen der Gerätedaten D1 in ein verteiltes Datenbanksystem aufweisen.

In Figur 1 ist weiter ein Netzwerk NW gezeigt, über welches mehrere Geräte verbunden sind. Über diese Netzwerkinfrastruktur NW ist die Blockkette BC realisiert. Es sind Knoten BCN der Blockkette gezeigt. Die Knoten BCN sind beispielsweise weitere Geräte. Vorzugsweise umfasst die Blockkette eine Vielzahl an Knoten BCN. Die Vorrichtung 100 ermöglicht, Gerätedaten des Geräts FG in die Blockkette BC einzufügen, d.h. es werden insbesondere eine oder mehrere Transaktionen oder ein Datenblock mit seinen Transaktionen an einen oder mehrere Knoten BCN der Blockkette BC übermittelt. Wird eine solche Transaktion erfolgreich validiert, z.B. durch einen der Knoten BCN, kann diese Transaktion als neuer Datenblock mit mindestens einem vorhandenen Datenblock der Blockkette BC gespeichert werden.

Die Vorrichtung 100 ist über eine Kommunikationsverbindung C mit dem verteilten Datenbanksystem verbunden, so dass ein Datenaustausch realisiert werden kann. Die Vorrichtung umfasst eine erste Kommunikationsschnittstelle 101, die derart eingerichtet ist, Daten über die Kommunikationsverbindung C das Netzwerk NW zu empfangen und anhand der empfangenen Daten eine Verfügbarkeit einer Blockkette oder eines anderen verteilten Datenbanksystems zu detektieren. Die erste Kommunikationsschnittstelle 101 ist außerdem derart eingerichtet, eine Datenbankkonfigurationsinformation D2 zu empfangen bzw. aus den empfangenen Daten abzuleiten, sobald ein verteiltes Datenbanksystem, wie z.B. die Blockkette BC, detektiert ist. Die Datenbankkonfigurationsinformation umfasst insbesondere Informationen über den Technologietyp der detektierten Blocckette BC. Eine Datenbankkonfigurationsinformation kann insbesondere auch eine Information über einen Genesis-Block, einen Boot Node, Peer Informationen, oder zu Smart Contract Adressen sein. Somit kann die Vorrichtung 100 insbesondere mehr als ein verteiltes Datenbanksystem bzw. unterschiedliche verteilte Datenbanksysteme detektieren, an diese koppeln und Gerätedaten des Geräts einfügen.

Die Vorrichtung 100 umfasst weiter eine zweite Kommunikationsschnittstelle 102, die mit dem Gerät FG über die drahtlose oder drahtgebundene Verbindung K gekoppelt ist. Falls die Vorrichtung 100 als Teil des Geräts FG realisiert ist, kann die Verbindung K insbesondere auch ein Datenbus sein. Die zweite Kommunikationsschnittstelle 102 ist derart eingerichtet, Gerätedaten D1 des Geräts über die Verbindung K zu empfangen. Bei Gerätedaten kann es sich insbesondere um die Originaldaten des Geräts, um von den Gerätedaten abgeleitete Daten oder bearbeitete Daten, wie z.B. gemittelte oder selektierte Daten, handeln.

Die Vorrichtung 100 umfasst weiter ein Konfigurationsmodul 103 und ein Datenbereitstellungsmodul 106. Das Konfigurationsmodul 103 ist derart eingerichtet, das Datenbereitstellungsmodul 106 zu konfigurieren. Dazu ist das Konfigurationsmodul 103 eingerichtet, mindestens einen Konfigurationsparameter aus einer Menge von auf dem Konfigurationsmodul 103 gespeicherten Konfigurationsparametern für eine Konfiguration des Datenbereitstellungsmoduls 106 zu selektieren.

Vorzugsweise sind auf dem Konfigurationsmodul 103 eine Vielzahl von Konfigurationsparametern gespeichert, die jeweils eine Anbindung der Vorrichtung 100 an ein verteiltes Datenbanksystem ermöglichen. Der mindestens eine selektierte Konfigurationsparameter wird mittels einer Prüfeinheit des Konfigurationsmoduls in Abhängigkeit der empfangenen Datenbanckonfigurationsinformation D2 geprüft. Es wird insbesondere geprüft, ob der mindestens eine selektierte Konfigurationsparameter derart ausgestaltet ist, das Datenbereitstellungsmodul 106 so zu konfigurieren, dass es eine für die detektierte Blockkette BC geeignete Konfiguration aufweist. In anderen Worten, es wird mindestens ein zu der Konfiguration der Blockkette BC bzw. des entsprechenden verteilten Datenbanksystems passender Konfigurationsparameter für die Datenbereitstellungseinheit 106 gesucht. Wenn die Prüfung ein positives Prüfergebnis ergibt, d.h. wenn der mindestens eine selektierte Konfigurationsparameter zu der Konfiguration der Blockkette BC passt, wird das Datenbereitstellungsmodul damit konfiguriert, so dass es eine für die Anbindung an die Blocckette BC geeignete Konfiguration aufweist. Wenn das Prüfergebnis negativ ist, kann mindestens ein weiterer Konfigurationsparameter selektiert und geprüft werden. Somit kann iterativ eine geeignete Konfiguration für das Datenbereitstellungsmodul 106 ermittelt werden.

Die Vorrichtung umfasst weiter ein Identifikationsmodul 104, das derart eingerichtet ist, eine Identifikationsinformation ID für die Vorrichtung 100 bereitzustellen. Die Identifikationsinformation ID ist insbesondere abhängig von mindestens einem Teil der Gerätedaten D1. Beispielsweise kann ein Teil der Gerätedaten gerätespezifische Identifikationsdaten des Geräts umfassen. Die Identifikationsinformation ID der Vorrichtung 100 wird somit mit der Geräteidentität verknüpft. Das Identifikationsmodul 104 kann insbesondere derart eingerichtet sein, die Identifikationsinformation ID außerdem abhängig von der empfangenen Datenbankkonfigurationsinformation D2 zu generieren und bereitzustellen. Damit kann die Vorrichtung 100 zusätzlich abhängig von einem verteilten Datenbanksystem identifiziert werden.

Das Identifikationsmodul 104 kann insbesondere derart eingerichtet sein, die generierte Identifikationsinformation ID an eine über das Netzwerk NW gekoppelte Identifikationsverwaltungseinheit CA zu übermitteln. Eine Identifikationsverwaltungseinheit CA kann als Bereitstellungsvorrichtung zum Bereitstellen und Verifizieren einer Identität verstanden werden. Unter einer Identifikationsverwaltungseinheit kann insbesondere eine Zertifizierungsstelle verstanden werden. In anderen Worten, die Identifikationsverwaltungseinheit CA kann beispielsweise derart eingerichtet sein, eine Identität für ein Gerät oder eine Vorrichtung bereitzustellen, d.h. das Gerät oder die Vorrichtung für das verteilte Datenbanksystem zu registrieren bzw. anzumelden.

Die Identifikationsverwaltungseinheit CA ist vorzugsweise Teil der Blockkette und derart eingerichtet, Zertifikate auszustellen und/oder zu widerrufen, die für eine Registrierung eines Geräts für die Blockkette BC geeignet sind. So kann die Identifikationsverwaltungseinheit CA ein Zertifikat CERT für die Vorrichtung 100 in Abhängigkeit der Identifikationsinformation ID ausstellen und zurück an das Identifikationsmodul 104 übermitteln. Die Vorrichtung 100 umfasst weiter ein Registrierungsmodul 105, welches die Vorrichtung 100 abhängig von der Identifikationsinformation ID für das verteilte Datenbanksystem registriert. Insbesondere kann das Registrierungsmodul 105 die Vorrichtung mittels des Zertifikats CERT registrieren.

Sobald die Vorrichtung 100 für die Blockkette BC registriert ist, d.h. in Abhängigkeit einer erfolgreichen Registrierung der Vorrichtung 100 durch das Registrierungsmodul 105, können mittels des Datenbereitstellungsmoduls 106 Gerätedaten D1 mit Bezug auf die Identifikationsinformation ID in die Blockkette eingefügt werden. So können die Gerätedaten beispielsweise mit einem Block der Blockkette BC verkettet werden. Durch den Bezug auf die Identifikationsinformation ID sind die Gerätedaten D1 insbesondere integritätsgeschützt. Beispielsweise wird die Identifikationsinformation ID den Gerätedaten D1 zugeordnet oder zu diesen hinzugefügt.

Das Datenbereitstellungsmodul 106 ist vorzugsweise mit der zweiten Kommunikationsschnittstelle 102 verbunden, so dass es von dort die Gerätedaten D1 empfangen kann. Das Datenbereitstellungsmodul 106 ist vorzugsweise derart eingerichtet, die Gerätedaten D1 in ein datenbankspezifisches Format, z.B. an eine Transaktion gekoppelt, gemäß der Datenbankkonfigurationsinformation D2 zu konvertieren und derart in die Blockkette BC einzufügen. Das Datenbereitstellungsmodul 106 ist vorzugsweise mit der ersten Kommunikationsschnittstelle 101 verbunden, so dass über diese erste Kommunikationsschnittstelle 101 auch das Einfügen der Gerätedaten D1 in die Blockkette erfolgen kann. Außerdem kann das Datenbereitstellungsmodul 106 einen kryptographischen Schutz, z.B. durch eine Prüfsumme, für die Transaktion bzw. die Gerätedaten realisieren.

Die Vorrichtung 100 kann weiter ein Verwaltungsmodul 107 umfassen, das derart eingerichtet ist, in Abhängigkeit der Identifikationsinformation ID mindestens einen Programmbefehl von der Blockkette BC zu empfangen. Bei dem Programmbefehl kann es sich insbesondere um einen Smart-Contract handeln, der mindestens eine Regel für das Einfügen von Gerätedaten in die Blockkette BC umfasst. Das Verwaltungsmodul 107 ist vorzugsweise mit dem Datenbereitstellungsmodul 106 gekoppelt und stellt diesem den empfangenen Programmbefehl bereit. Das Datenbereitstellungsmodul 106 kann demnach die Gerätedaten D1 abhängig von dem Programmbefehl in die Blockkette einfügen. In anderen Worten, das Verwaltungsmodul empfängt Regeln, z.B. Smart contracts, auf Basis der Identifikationsinformation ID, die dem Gerät FG zugeordnet ist, wobei die Regeln den Datenaustausch mit der Blockkette regeln. Die empfangenen Programmbefehle sind mit der Knotenidentität ID verknüpft, um insbesondere lediglich Programmbefehle zu erhalten, die für das Gerät FG geeignet sind. Beispielsweise kann es sich bei dem Gerät FG um einen Temperatursensor halten, dem lediglich einen Smart Contract bezüglich Temperaturmessung zugeordnet wird.

Die Module der Vorrichtung 100 sind insbesondere vorteilhaft miteinander verbunden, so dass sie untereinander Information bzw. Daten austauschen können.

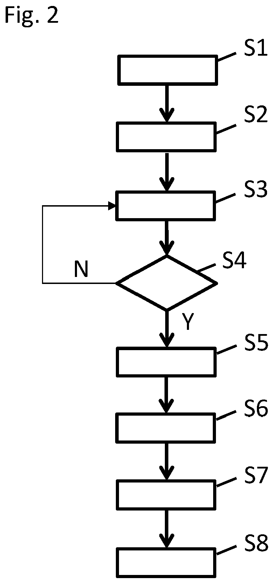

Figur 2 zeigt ein zweites Ausführungsbeispiel der Erfindung als Ablaufdiagramm. Es sind Schritte eines erfindungsgemäßen Verfahrens zum Einfügen von Gerätedaten D1 eines Geräts in ein verteiltes Datenbanksystem gezeigt. Das Verfahren kann mittels einer erfindungsgemäßen Vorrichtung, wie beispielhaft anhand Figur 1 erläutert, durchgeführt werden.

Beim ersten Schritt S1 wird eine Datenbankkonfigurationsinformation eines verteilten Datenbanksystems über ein mit der Vorrichtung gekoppeltes Netzwerk empfangen. Vorzugsweise wird zuvor eine Netzwerkanfrage (ping) durch die Vorrichtung an weitere Geräte des Netzwerks durchgeführt, um eine Verfügbarkeit eines verteilten Datenbanksystems zu prüfen. Die weiteren Geräte können, sobald sie die Anfrage erhalten, die Vorrichtung verifizieren und Zugriff auf das verteilte Datenbanksystem geben.

Beim nächsten Schritt S2 werden Gerätedaten von dem Gerät empfangen. Vorzugsweise werden lediglich Gerätedaten empfangen, die für das verteilte Datenbanksystem bereitgestellt werden sollen.

Beim nächsten Schritt S3 wird aus einer Menge von gespeicherten Konfigurationsparametern mindestens ein Konfigurationsparameter für eine Konfiguration eines Datenbereitstellungsmoduls der Vorrichtung selektiert. Anschließend, im Schritt S4, wird der mindestens eine selektierte Konfigurationsparameter in Abhängigkeit der Datenbankkonfigurationsinformation geprüft, d.h. beispielsweise wird eine Kompatibilitätsprüfung des mindestens einen Konfigurationsparameters anhand der Konfiguration des verteilten Datenbanksystems durchgeführt, und das Prüfergebnis wird ausgegeben. Im Fall eines positiven Prüfergebnisses Y wird als nächster Schritt S5 das Datenbereitstellungsmodul anhand des mindestens einen selektierten Konfigurationsparameters konfiguriert. Im Fall eines negativen Prüfergebnisses N wird der Selektionsschritt S3 wiederholt bis mindestens ein geeigneter Konfigurationsparameter gefunden wird. Wenn kein geeigneter Konfigurationsparameter gefunden wird, wird der Konfigurationsprozess und/oder der Registrierungsprozess, Schritt S6 und S7, abgebrochen bzw. nicht durchgeführt. In diesem Fall kann beispielsweise eine Fehlermeldung ausgegeben werden.

Beim Schritt S6 wird eine Identifikationsinformation für die Vorrichtung generiert, wobei die Identifikationsinformation abhängig von mindestens einem Teil der Gerätedaten ist. Abhängig von der Identifikationsinformation wird die Vorrichtung im Schritt S7 für das verteilte Datenbanksystem registriert.

Sobald das Datenbereitstellungsmodul konfiguriert ist und die Vorrichtung für das verteilte Datenbanksystem registriert ist, werden im Schritt S8 die Gerätedaten mit Bezug auf die Identifikationsinformation in das verteilte Datenbanksystem eingefügt. Beispielsweise wird die Identifikationsinformation den Gerätedaten zugeordnet, so dass die in das verteilte Datenbanksystem eingefügten Gerätedaten eindeutig dem Gerät zugeordnet werden können. Das Einfügen der Gerätedaten kann dabei insbesondere anhand von Smart Contracts geregelt werden, die vorzugsweise abhängig von der Identifikationsinformation vom verteilten Datenbanksystem empfangen werden.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Vorrichtung (100) zum Einfügen von Gerätedaten (D1) eines Geräts (FG) in ein verteiltes Datenbanksystem (BC), umfassend:
- eine erste Kommunikationsschnittstelle (101), die derart eingerichtet ist, eine Datenbankkonfigurationsinformation (D2) von dem verteilten Datenbanksystem zu empfangen,
- eine zweite Kommunikationsschnittstelle (102), die mit dem Gerät gekoppelt und derart eingerichtet ist, Gerätedaten von dem Gerät zu empfangen,
- ein Konfigurationsmodul (103), das derart eingerichtet ist,
- mindestens einen Konfigurationsparameter aus einer Menge von auf dem Konfigurationsmodul gespeicherten Konfigurationsparametern für eine Konfiguration eines Datenbereitstellungsmodul der Vorrichtung zu selektieren,
- den mindestens einen selektierten Konfigurationsparameter in Abhängigkeit der Datenbankkonfigurationsinformation (D2) zu prüfen und ein Prüfergebnis auszugeben,
- und abhängig vom Prüfergebnis das Datenbereitstellungsmodul anhand des mindestens einen selektierten Konfigurationsparameters zu konfigurieren,
**dadurch gekennzeichnet, dass** die Vorrichtung weiterhin umfasst:
- ein Identifikationsmodul (104), das derart eingerichtet ist, eine Identifikationsinformation (ID) für die Vorrichtung (100) bereitzustellen, wobei die Identifikationsinformation abhängig von mindestens einem Teil der Gerätedaten ist,
- ein Registrierungsmodul (105), das derart eingerichtet ist, die Vorrichtung (100) abhängig von der Identifikationsinformation (ID) für das verteilte Datenbanksystem (BC) zu registrieren,
und
- ein Datenbereitstellungmodul (106), das derart eingerichtet ist, abhängig vom Prüfergebnis die Gerätedaten mit Bezug auf die Identifikationsinformation (ID) in das verteilte Datenbanksystem einzufügen
wobei das Identifikationsmodul (104) derart eingerichtet ist,
- die Identifikationsinformation (ID) an eine über das Netzwerk gekoppelte Identifikationsverwaltungseinheit (CA) zum Ausstellen eines Zertifikats (CERT) in Abhängigkeit der Identifikationsinformation zu übermitteln und
- ein von der Identifikationsverwaltungseinheit (CA) ausgestelltes Zertifikat (CERT) zum Registrieren der Vorrichtung für das verteilte Datenbanksystem zu empfangen, und wobei das Registrierungsmodul (105) eingerichtet ist, die Vorrichtung anhand des Zertifikats (CERT) zu registrieren.

2. Vorrichtung nach Anspruch 1, wobei die zweite Kommunikationsschnittstelle (102) eingerichtet ist, die Gerätedaten (D1) dem Datenbereitstellungsmodul (106) für das Einfügen in das verteilte Datenbanksystem (BC) bereitzustellen.

3. Vorrichtung nach einem der vorhergehenden Ansprüche, wobei das Konfigurationsmodul (103) derart eingerichtet ist, das Datenbereitstellungsmodul (106) anhand des mindestens einen selektierten Konfigurationsparameters zu konfigurieren, so dass das Datenbereitstellungsmodul eine für das verteilten Datenbanksystem geeignete Konfiguration aufweist.

4. Vorrichtung nach einem der vorhergehenden Ansprüche, wobei das Datenbereitstellungsmodul (106) derart eingerichtet ist, die Gerätedaten (D1) in ein datenbankspezifisches Format gemäß der Datenbankkonfigurationsinformation (D2) zu konvertieren und derart in das verteilte Datenbanksystem einzufügen.

5. Vorrichtung nach einem der vorhergehenden Ansprüche, wobei das Identifikationsmodul (104) derart eingerichtet ist, die Identifikationsinformation (ID) abhängig von der Datenbankkonfigurationsinformation (D2) bereitzustellen.

6. Vorrichtung nach einem der vorhergehenden Ansprüche, wobei die erste Kommunikationsschnittstelle (101) derart eingerichtet ist, Daten über ein mit der Vorrichtung verbundenes Netzwerk (NW), über welches das verteilte Datenbanksystem (BC) realisiert ist, zu empfangen und anhand der empfangenen Daten eine Verfügbarkeit des verteilten Datenbanksystems zu detektieren.

7. Vorrichtung nach einem der vorhergehenden Ansprüche umfassend ein Verwaltungsmodul (107), das derart eingerichtet ist, in Abhängigkeit der Identifikationsinformation (ID) mindestens einen Programmbefehl von dem verteilten Datenbanksystem zu empfangen, wobei der Programmbefehl mindestens eine Regel für das Einfügen von Gerätedaten in das verteilte Datenbanksystem umfasst, und den Programmbefehl dem Datenbereitstellungsmodul bereitzustellen.

8. Vorrichtung nach Anspruch 7, wobei das Datenbereitstellungsmodul (106) derart eingerichtet ist, die Gerätedaten (D1) gemäß der Regel des Programmbefehls in das verteilte Datenbanksystem einzufügen.

9. Vorrichtung nach einem der vorhergehenden Ansprüche, wobei das Datenbereitstellungsmodul (106) derart eingerichtet ist, abhängig von der Registrierung der Vorrichtung das verteilte Datenbanksystem (BC) anzusteuern.

10. Vorrichtung nach einem der vorhergehenden Ansprüche, wobei das verteilte Datenbanksystem (BC) als eine Blockkette realisiert ist.

11. Computerimplementiertes Verfahren zum Einfügen von Gerätedaten (D1) eines Geräts (FG) in ein verteiltes Datenbanksystem (BC), umfassend die Schritte:
- Empfangen (S1) einer Datenbankkonfigurationsinformation eines verteilten Datenbanksystems,
- Empfangen (S2) von Gerätedaten von dem Gerät,
- Selektieren (S3) mindestens eines Konfigurationsparameters aus einer Menge von gespeicherten Konfigurationsparametern für eine Konfiguration eines Datenbereitstellungsmoduls einer Vorrichtung,
- Prüfen (S4) des mindestens einen selektierten Konfigurationsparameters in Abhängigkeit der Datenbankkonfigurationsinformation und Ausgeben eines Prüfergebnisses,
- Konfigurieren (S5) des Datenbereitstellungsmoduls abhängig vom Prüfergebnis anhand des mindestens einen selektierten Konfigurationsparameters, **dadurch gekennzeichnet, dass** das Verfahren weiterhin die folgenden Schritte umfasst:
- Bereitstellen (S6) einer Identifikationsinformation für die Vorrichtung, wobei die Identifikationsinformation abhängig von mindestens einem Teil der Gerätedaten ist,
- Registrieren (S7) der Vorrichtung für das verteilte Datenbanksystem abhängig von der Identifikationsinformation, und
- Einfügen (S8) der Gerätedaten mit Bezug auf die Identifikationsinformation in das verteilte Datenbanksystem abhängig vom Prüfergebnis,
wobei die Identifikationsinformation (ID) an eine über das Netzwerk gekoppelte Identifikationsverwaltungseinheit (CA) zum Ausstellen eines Zertifikats (CERT) in Abhängigkeit der Identifikationsinformation übermittelt wird und
- ein von der Identifikationsverwaltungseinheit (CA) ausgestelltes Zertifikat (CERT) zum Registrieren der Vorrichtung für das verteilte Datenbanksystem empfangen wird, und wobei die Vorrichtung anhand des Zertifikats (CERT) registriert wird.

12. Computerprogrammprodukt, das direkt in einen programmierbaren Computer ladbar ist, umfassend Programmcodeteile, die dazu geeignet sind, die Schritte des Verfahrens nach Anspruch 11 durchzuführen.

## Claims

1. Apparatus (100) for inserting device data (D1) from a device (FG) into a distributed database system (BC), comprising:
- a first communication interface (101) which is configured to receive database configuration information (D2) from the distributed database system,
- a second communication interface (102) which is coupled to the device and is configured to receive device data from the device,
- a configuration module (103) which is configured
- to select at least one configuration parameter from a set of configuration parameters stored in the configuration module for configuring a data provision module of the apparatus,
- to check the at least one selected configuration parameter on the basis of the database configuration information (D2) and to output a checking result,
- and, on the basis of the checking result, to configure the database provision module using the at least one selected configuration parameter,
**characterized in that** the apparatus also comprises:
- an identification module (104) which is configured to provide identification information (ID) for the apparatus (100), wherein the identification information is dependent on at least some of the device data,
- a registration module (105) which is configured to register the apparatus (100) for the distributed database system (BC) on the basis of the identification information (ID),
and
- a data provision module (106) which is configured, on the basis of the checking result, to insert the device data into the distributed database system with reference to the identification information (ID),
wherein the identification module (104) is configured
- to transmit the identification information (ID) to an identification management unit (CA), which is coupled via the network, for the purpose of issuing a certificate (CERT) on the basis of the identification information, and
- to receive a certificate (CERT), which is issued by the identification management unit (CA), for the purpose of registering the apparatus for the distributed database system, and wherein the registration module (105) is configured to register the apparatus on the basis of the certificate (CERT).

2. Apparatus according to Claim 1, wherein the second communication interface (102) is configured to provide the data provision module (106) with the device data (D1) for insertion into the distributed database system (BC).

3. Apparatus according to one of the preceding claims, wherein the configuration module (103) is configured to configure the data provision module (106) using the at least one selected configuration parameter, such that the data provision module has a configuration suitable for the distributed database system.

4. Apparatus according to one of the preceding claims, wherein the data provision module (106) is configured to convert the device data (D1) into a database-specific format according to the database configuration information (D2) and to insert said data into the distributed database system in this manner.

5. Apparatus according to one of the preceding claims, wherein the identification module (104) is configured to provide the identification information (ID) on the basis of the database configuration information (D2).

6. Apparatus according to one of the preceding claims, wherein the first communication interface (101) is configured to receive data via a network (NW), which is connected to the apparatus and is used to implement the distributed database system (BC), and to detect availability of the distributed database system on the basis of the received data.

7. Apparatus according to one of the preceding claims, comprising a management module (107) which is configured to receive at least one program instruction from the distributed database system on the basis of the identification information (ID), wherein the program instruction comprises at least one rule for inserting device data into the distributed database system, and to provide the data provision module with the program instruction.

8. Apparatus according to Claim 7, wherein the data provision module (106) is configured to insert the device data (D1) into the distributed database system according to the rule of the program instruction.

9. Apparatus according to one of the preceding claims, wherein the data provision module (106) is configured to control the distributed database system (BC) on the basis of the registration of the apparatus.

10. Apparatus according to one of the preceding claims, wherein the distributed database system (BC) is implemented as a blockchain.

11. Computer-implemented method for inserting device data (D1) from a device (FG) into a distributed database system (BC), comprising the steps of:
- receiving (S1) database configuration information relating to a distributed database system,
- receiving (S2) device data from the device,
- selecting (S3) at least one configuration parameter from a set of stored configuration parameters for configuring a data provision module of an apparatus,
- checking (S4) the at least one selected configuration parameter on the basis of the database configuration information and outputting a checking result,
- configuring (S5) the data provision module on the basis of the checking result using the at least one selected configuration parameter, **characterized in that** the method also comprises the following steps:
- providing (S6) identification information for the apparatus, wherein the identification information is dependent on at least some of the device data,
- registering (S7) the apparatus for the distributed database system on the basis of the identification information,
and
- inserting (S8) the device data into the distributed database system with reference to the identification information on the basis of the checking result,
wherein the identification information (ID) is transmitted to an identification management unit (CA), which is coupled via the network, for the purpose of issuing a certificate (CERT) on the basis of the identification information, and
- a certificate (CERT), which is issued by the identification management unit (CA), is received for the purpose of registering the apparatus for the distributed database system,
and wherein the apparatus is registered on the basis of the certificate (CERT).

12. Computer program product which can be directly loaded into a programmable computer, comprising program code parts which are suitable for carrying out the steps of the method according to Claim 11.

## Revendications

1. Dispositif (100) pour insérer des données (D1) d'appareil d'un appareil (FG) dans un système (BC) de base de données réparties, comprenant :
- une première interface (101) de communication, qui est agencée pour recevoir une information (D2) de configuration de base de données du système de base de données réparties,
- une deuxième interface (102) de communication, qui est reliée à l'appareil et qui est agencée de manière à recevoir des données d'appareil de l'appareil,
- un module (103) de configuration, qui est agencé
- pour sélectionner au moins un paramètre de configuration dans un ensemble de paramètres de configuration mis en mémoire sur le module de configuration pour une configuration d'un module de mise à disposition de données du dispositif,
- pour contrôler le au moins un paramètre de configuration sélectionné en fonction de l'information (D2) de configuration de base de données et émettre un résultat du contrôle,
- et, en fonction du résultat du contrôle, pour configurer le module de mise à disposition de données, à l'aide du au moins un paramètre de configuration sélectionné,
**caractérisé en ce que** le dispositif comprend en outre :
- un module (104) d'identification, qui est agencé pour mettre à disposition une information (ID) d'identification pour le dispositif (100), dans lequel l'information d'identification dépend d'au moins une partie des données d'appareil,
- un module (105) d'enregistrement, qui est agencé pour enregistrer le dispositif (100) en fonction de l'information (ID) d'identification pour le système (BC) de base de données réparties, et
- un module (106) de mise à disposition de données, qui est agencé pour, en fonction du résultat du contrôle, insérer des données d'appareil en se rapportant à l'information (ID) d'identification dans le système de base de données réparties,
dans lequel le module (104) d'identification est agencé pour
- transmettre, en fonction de l'information d'identification pour l'établissement d'un certificat (CERT), l'information (ID) d'identification à une unité (CA) de gestion d'identification reliée en passant par le réseau, et
- recevoir, pour l'enregistrement du dispositif pour le système de base de données réparties, un certificat (CERT) établi par l'unité (CA) de gestion d'identification, et dans lequel le module (105) d'enregistrement est agencé pour enregistrer le dispositif à l'aide du certificat (CERT).

2. Dispositif suivant la revendication 1, dans lequel la deuxième interface (102) de communication est agencée pour mettre les données (D1) d'appareil à disposition du module (106) de mise à disposition de données pour l'insertion dans le système (BC) de base de données réparties.

3. Dispositif suivant l'une des revendications précédentes, dans lequel le module (103) de configuration est agencé pour configurer le module (106) de mise à disposition de données à l'aide du au moins un paramètre de configuration sélectionné, de manière à ce que le module de mise à disposition de données ait une configuration appropriée au système de base de données réparties.

4. Dispositif suivant l'une des revendications précédentes, dans lequel le module (106) de mise à disposition de données est agencé pour transformer, suivant l'information (D2) de configuration de base de données, les données (D1) d'appareil en un format spécifique à une base de données et pour ainsi les insérer dans le système de base de données réparties.

5. Dispositif suivant l'une des revendications précédentes, dans lequel le module (104) d'identification est agencé pour mettre à disposition l'information (ID) d'identification en fonction de l'information (D2) de configuration de base de données.

6. Dispositif suivant l'une des revendications précédentes, dans lequel la première interface (101) de communication est agencée pour recevoir des données par un réseau (NW), qui est relié au dispositif et par lequel le système (BC) de base de données réparties est réalisé et pour, à l'aide des données reçues, détecter une disponibilité du système de base de données réparties.

7. Dispositif suivant l'une des revendications précédentes, comprenant un module (107) de gestion, qui est agencé pour, en fonction de l'information (ID) d'identification, recevoir du système de base de données réparties au moins une instruction de programme, dans lequel l'instruction de programme comprend au moins une règle pour l'insertion de données d'appareil dans le système de base de données réparties et pour mettre l'instruction de programme à disposition du module de mise à disposition de données.

8. Dispositif suivant la revendication 7, dans lequel le module (106) de mise à disposition de données est agencé pour insérer les données (D1) d'appareil conformément à la règle de l'instruction de programme dans le système de base de données réparties.

9. Dispositif suivant l'une des revendications précédentes, dans lequel le module (106) de mise à disposition de données est agencé pour commander le système (BC) de base de données réparties en fonction de l'enregistrement du dispositif.

10. Dispositif suivant l'une des revendications précédentes, dans lequel le système (BC) de base de données est réalisé sous la forme d'une bloc chaine.

11. Procédé mis en œuvre par ordinateur d'insertion de données (D1) d'appareil d'un appareil (FG) dans un système (BC) de base de données réparties, comprenant les stades :
- réception (S1) d'une information de configuration de base de données d'un système de base de données réparties,
- réception (S2) de données d'appareil de l'appareil,
- sélection (S3) d'au moins un paramètre de configuration parmi un ensemble de paramètres de configuration mis en mémoire pour une configuration d'un modèle de mise à disposition de données d'un dispositif,
- contrôle (S4) du au moins un paramètre de configuration sélectionné en fonction de l'information de configuration de base de données et émission d'un résultat de contrôle,
- configuration (S5) du module de mise à disposition de données en fonction du résultat de contrôle, à l'aide d'au moins un paramètre de configuration sélectionné, **caractérisé en ce que** le procédé comprend en outre les stades suivants :
- mise à disposition (S6) d'une information d'identification pour le dispositif, dans lequel l'information d'identification dépend d'au moins une partie des données d'appareil,
- enregistrement (S7) du dispositif pour le système de base de données réparties en fonction de l'information d'identification, et
- insertion (S8) des données d'appareil en se rapportant à l'information d'identification dans le système de base de données réparties en fonction du résultat de contrôle,
dans lequel on transmet, en fonction de l'information d'identification pour l'établissement d'un certificat (CERT), l'information (ID) d'identification à une unité (CA) de gestion d'identification reliée en passant par le réseau, et
- on reçoit, pour l'enregistrement du dispositif pour le système de base de données réparties, un certificat (CERT) établi par l'unité (CA) de gestion d'identification, et dans lequel on enregistre le dispositif à l'aide du certificat (CERT).

12. Produit de programme d'ordinateur, qui peut être chargé directement dans un ordinateur programmable, comprenant des parties de code de programme, qui sont propres à exécuter les stades du procédé suivant la revendication 11.
